Europäisches Patentamt

European Patent Office

Office européen des brevets

(11) Publication number: **0 047 582**
**B1**

(12) **EUROPEAN PATENT SPECIFICATION**

(45) Date of publication of patent specification: **05.12.84**

(51) Int. Cl.³: **F 02 C 9/00, F 16 H 37/14**

(21) Application number: **81303657.1**

(22) Date of filing: **11.08.81**

(54) **Engine fuel control systems.**

(30) Priority: **21.08.80 US 180224**
**17.04.81 US 255088**

(43) Date of publication of application:
**17.03.82 Bulletin 82/11**

(45) Publication of the grant of the patent:
**05.12.84 Bulletin 84/49**

(84) Designated Contracting States:
**DE FR GB IT SE**

(56) References cited:
**DE-B-1 036 868**
**FR-A-2 191 023**
**FR-A-2 222 901**
**GB-A- 665 304**
**GB-A-1 174 422**
**US-A-3 363 480**
**US-A-3 451 286**
**US-A-4 088 039**

(73) Proprietor: **THE GARRETT CORPORATION**
**9851-9951 Sepulveda Boulevard P.O. Box 92248**
**Los Angeles, California 90009 (US)**

(72) Inventor: **Earl, Robert W.**
**724 Via Somonte**
**Palos Verdes Estates California, 90274 (US)**
Inventor: **McCormack, William H.**
**2833 Calle Aventura**
**Rancho Palos Verdes California (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates to a mechanical variable authority trim mixer which acts to combine a primary mechanical input from a throttle, a secondary mechanical input from a fuel trimming actuator and a third input from a cam element which modifies or neutralises the authority of the trim actuator through selected ranges of the throttle stroke to produce a single output which is conveyed to a fuel metering control system associated with an engine, and more particularly, to a variable authority trim mixer of the described type for use as a fuel control linkage member in an aircraft which modifies or neutralises the authority of the trim actuator to influence the output when the primary throttle is in critical areas of its stroke.

A wide variety of devices are used to communicate a desired throttle setting from the throttle quadrant of an aircraft to the fuel control associated with the engine. Typically, direct mechanical or electronic linkage between the throttle and fuel control have been employed to control the amount of fuel which is provided to an engine to provide control based upon speed, temperature, or other selected engine parameters.

It has been found to be desirable to trim, or automatically fine tune, the amount of fuel delivered to the engine without direct pilot movement of the throttles and without the use of an autothrottle. This allows the pilot to select an appropriate throttle setting for each flight mode and then turn his attention to other duties while the engine is automatically trimmed. An engine management system for accomplishing this is disclosed in GB—A—1,174,422, in which the response of a fuel control to movement of a throttle control can be varied by a temperature responsive input member.

In such a system, particular care must be taken to control the engine when the throttle setting is near the upper or lower end of the forward thrust throttle stroke, inasmuch as there is a higher possibility that a trimming system malfunction could cause a loss of maximum thrust or flameout respectively. Additional care must be taken during reverse thrust operations, during aircraft landing to eliminate the possibility of down trim since such an occurrence could cause loss of sufficient braking to stop the aircraft.

According to the present invention, a mechanical variable authority fuel control for an engine, particularly an aircraft engine, comprising input means responsive to a basic signal from a throttle control member demanding a desired basic rate of flow of fuel, an output member which is responsive to the input means and of which the movement forms an output signal controlling metering means to determine the actual flow of fuel, trim means responsive to a trim signal-normally a function of at least one engine parameter or flight parameter—arranged to vary the output signal resulting from a given position of the input means, has also modifying means mechanically dependent on the position of the input means for modifying the variation of the position of the output member produced by a given movement of the trim means.

Preferably the modifying means are such that at least at one position of the input means the trim means produce zero modification of the output signal. Conveniently, the modifying means comprise a cam and cam follower.

In one form of the invention the system includes an input member and an output member mounted coaxially to turn about a main axis and one carrying a sun gear while the other carries a planet carrier, a planet gear mounted on the planet carrier to mesh with the sun gear and to turn about a planet axis perpendicular to the main axis, so that movement of the planet gear about its axis will add to or subtract from movement of the sun gear due to that of the input member, and cam means serving to effect movement of the planet about its axis dependent upon the trim signal. Conveniently the sun gear and planet gear are meshing bevels.

The planet carrier may carry a cam follower spaced therefrom and co-operating with a cam generally conforming to the path of the follower and shaped to have a position in which it produces no movement of the follower parallel to the main axis due to rotation of the cam, but adjustable in accordance with the trim signal to produce more or less turning of the follower and planet to add to or subtract from the basic movement of the output member.

In one arrangement the cam has a movable part-circular track having a zero position coaxial with the main axis and is adjustable about an axis perpendicular thereto dependent on the trim signal.

Thus, the cam may have a semicircular track adjustable about a diameter perpendicular to the main axis so that when the input signal is such that the follower engages either end of the track, adjustment about the diameter produces no turning of the planet whereas when the follower is in an intermediate position, it produces a maximum turning movement of the planet for a given track displacement.

Preferably it also includes a fixed track forming a continuation of the semi-circular adjustable track at each end of the latter, so that at each end of the range of movement of the input member in which the trim signal contributes a component to the output signal there is a further range in which the trim signal contributes no component to the output signal.

Further features and details of the invention will be apparent from the following description of certain specific embodiments, given by way of example, with reference to the accompanying drawings, in which:—

Figure 1 is a partially broken away isometric view of a first embodiment of the variable authority trim mixer, in accordance with the present invention;

Figures 2—5 are partially broken away front elevational views of selected parts of the variable authority trim mixer of Figure 1 showing various operational configurations thereof;

Figure 6 is an isometric view of a second embodiment of the present invention;

Figures 7 and 9 are top plan views, and Figures 8 and 10 are elevational views of the device of Figure 6 illustrating various operational configurations thereof;

Figure 11 is an isometric view of a third embodiment of the present invention;

Figure 12 is a graph illustrating the operation of the variable authority trim mixer of the present invention;

Figure 13 is a top plan view of an aircraft which utilises the trim mixer of the present invention;

Figure 14 is a block diagram of a fuel control system which utilises the trim mixer of the present invention;

Figure 15 is a diagrammatic sketch of a system which uses the throttle linkage control of the present invention;

Figure 16 is a plan view of a planetary gear system of the present invention when the throttle lever is in one position;

Figure 17 is a side elevational view of the device of Figure 16 taken along line 17;

Figure 18 is a plan view of the device of Figure 16 with a movable cam in a first mode;

Figure 19 is a plan view similar to Figure 16 with the throttle lever in a second position;

Figure 20 is a side elevational view of the device of Figure 19 taken along line 20;

Figure 21 is a plan view of the device of Figure 19 when the movable cam is in the first trimming position;

Figure 22 is a plan view of the device of Figure 19 when the movable cam is in the second trimming position;

Figure 23 is a plan view similar to Figure 16 with the throttle lever in a third position;

Figure 24 is a side elevational view of the device of Figure 23 taken along line 24;

Figure 25 is a plan view of the device of Figure 23 with the movable cam in the first trimming position;

Figure 26 is a plan view similar to Figure 16 with the throttle lever in a reverse thrust position;

Figure 27 is an elevational view of the device of Figure 26 taken along line 27;

Figures 28—30 are detailed elevationals of a central rotating assembly and cam elements of the device of Figure 16; and

Figure 31 is a graph similar to Figure 12 showing operational relationships for the embodiment of the present invention shown in Figures 15—30.

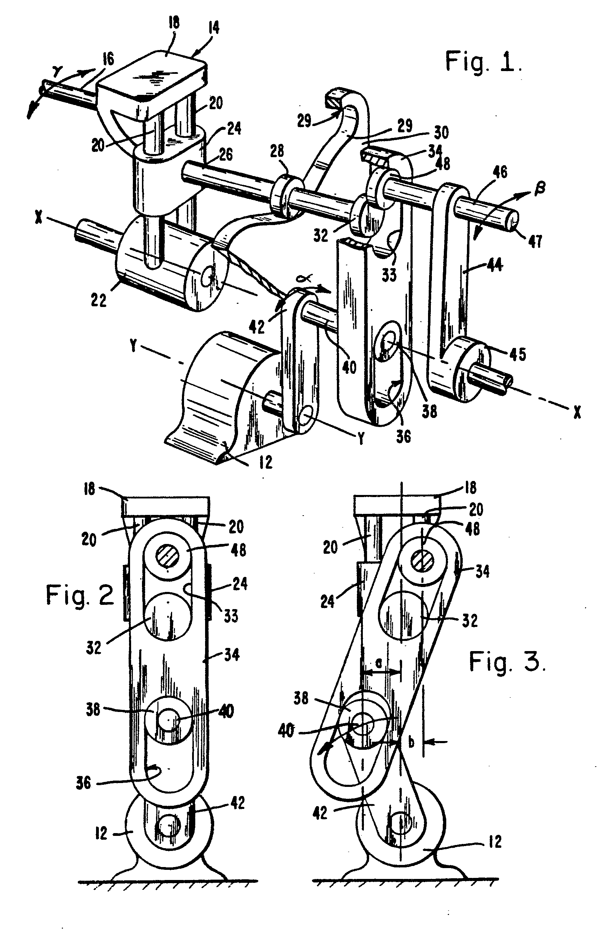

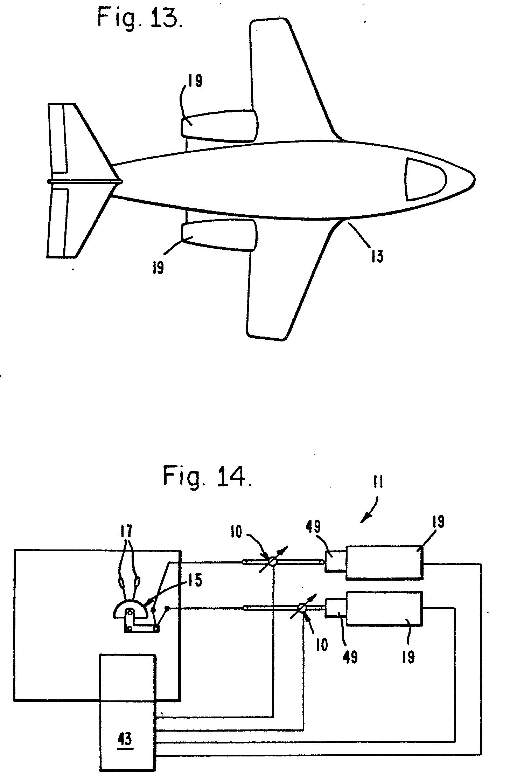

Referring now to the drawings Figures 1, 13 and 14 show a first embodiment of the variable authority trim mixer, generally designated by the reference numeral 10, of the present invention and its position in a fuel control system 11 for combining an angular input $\gamma$ from a throttle quadrant 15 of an aircraft 13 with a second angular input $\alpha$ from a trim actuator motor 12, to derive an output angular movement $\beta$ which is communicated to a fuel control device adjacent an engine to thereby control the amount of fuel which is delivered thereto. As shown in Figure 14, in a multiple engine aircraft, wherein the throttle quadrant 15 contains a throttle lever 17 for each engine 19, a variable authority trim mixer 10 will be interposed in the drive linkage between each throttle lever 17 and engine 19.

The variable authority trim mixer 10 includes a throttle input arm 14, which is designed to rotate about an axis XX which in turn, is fixed relative to ground as established by the aircraft 13 on which the mixer is used. The positioning of each throttle lever 17 relative to its limits of movement, causes a proportional positioning of the throttle input arm 14 between its extreme limits of movement. This is accomplished by transferring the angular motion of the throttle lever 17 to the throttle input arm 14, by a control cable or other means well known to those skilled in the art, to thereby cause forces to be applied to a protuberance 16 which is integrally formed with a cap 18 of the throttle input arm 14. Two generally parallel linear guides 20 interconnect the cap 18 and a hub 22. As is shown in Figure 1, the axis of the hub 22 is coextensive with axis XX to allow throttle input arm 14 to rotate thereabout.

A bored reciprocable block 24 is arranged on the guides 20 of the throttle input arm 14 so as to be slidable axially thereon. A throttle dowel 26 is suitably secured to the bored reciprocal block 24 in a fixed relationship thereto to be movable therewith. A follower 28 is suitably constrained to an area of the throttle dowel 26 so as to ride upon surfaces 29 of a cam element 30. It is the shape and contour of the surfaces 29 of the cam 30 which determine and define the authority for trim as will be more fully described hereinbelow.

A throttle head 32 is provided on the end of the throttle dowel 26 furthest from the bored reciprocal block 24 to ride in an elongated slot 33 of an input mixing arm 34. A second elongated slot 36 is provided at the opposite end of the elongated mixing arm 34 and receives a trimming head 38 of a trimming dowel 40. The trimming dowel 40 is rigidly affixed near one end of the trim input arm 42 which may be rotated about an axis YY by the trim actuator motor 12.

An output arm 44 is integrally formed with an output hub 45 and suitably journaled with respect to axis XX to rotate thereabout. An output dowel 46 is affixed near the upper end of the output arm 44 and includes an output head 48 which also rides in elongated slot 33, but offset from throttle head 32 to allow both heads 48 and 32 to ride the full length of slot 33. An end 47 of the output dowel 46 opposite the output head 48 is suitably and operably connected to fuel metering device 49 (Figure 14) to control the fuel flow to the engine in response to the position of output arm 44. Suitable coverings not shown in the drawings may be placed over the end of mixer arm 34 to prevent the removal of the heads 48, 32, and 38 from the slots 33 and 36.

A system includes a floating lever having three pivots connected respectively to the input member, the output member, and a member movable in accordance with the trim signal at least one of which pivots is adjustable along the lever to and from a position in which the input and output pivots are coaxial so that the output movement is independent of the trim signal.

The operation of the first embodiment is more readily understood by reference to Figures 1 through 5 and 14. The variable authority trim mixer 10 receives an angular input $p$ from the throttle quadrant 15 by positioning of the throttle levers 17 of the aircraft 13 and causes corresponding rotation of the throttle input arm 14 and axis XX. This movement of the throttle input arm 14 causes throttle dowel 26 to impart a desired rotation to the mixer arm 34 about the axis of the trim dowel 40. As is readily apparent, this movement translates the axis of throttle dowel 26 through a variety of selected positions and also rotates output dowel 46 of output arm 44 to impart the desired effect upon the fuel metering device of the engine in direct response to the throttle quadrant input $p$. After the throttle lever 17 is set to a desired position, it is locked against motion by the variable authority trim mixer 10 through the use of means such as throttle locking mechanisms, "no backs" or even drag associated with the throttle linkage leading to the mixer if sufficient.

As previously discussed it is desirable to be able to trim the amount of fuel which is delivererd to the engine either above or below that which has been indicated by the pilot as the desired fuel flow rate by his throttle 17 setting, without pilot or autothrottle manipulation or movement of the throttle levers 17. This is accomplished in the variable authority trim mixer 10 through the activation of the trim motor 12, via the use of electric current inputs thereto from an electronic control system 43 (Figure 14). Activation of the trim motor 12 causes rotation of trim input arm 42 from its centered or non-activated position to a commanded position such as from the position shown in Figure 2, to the position shown in Figure 3. This rotation causes a corresponding motion of trimming dowel 40 and trimming head 38 within the second elongated slot 36 to pivot the mixer arm 34 about the axis of the throttle dowel 26 and head 32 which remains fixed.

When the throttle input arm 14 is moved through its operating range, cam surface 29 of cam 30 causes a programmed motion of cam follower 28 and throttle dowel 26 such that block 24 moves radially outward or radially inward along the linear guides 20 on the throttle input arm 14. Corresponding motion of the throttle head 32 and the throttle dowel 26 occurs, causing it to approach alignment with output head 48 of the output dowel 46. In the preferred embodiment, the cam 30 is constructed so that heads 32 and 48 and accordingly dowels 26 and 46 become axially aligned near the end portions of the permissible motion of the throttle input arm 14 and are out of alignment through the remainder of the permissible motion of the input arm 14 stroke.

Figures 2 and 3 illustrate fuel control trimming operation of the variable authority trim mixer 10 when the throttle input arm 14 is in the range intermediate the extreme ends of its stroke wherein the axes of throttle dowel 26 and head 32 are in a non-coincident relationship with the axes of output dowel 46 and head 48 of the output arm 44.

Figure 2 shows the throttle input arm 14 in the centre of its stroke where, in this embodiment (see Figure 1), the shape of the cam 30 produces the greatest distance between the axes of dowels 26 and 46. The output arm 44 which is illustrated by the head 48 (in Figures 2 and 3) of output arm dowel 46 is seen to be in alignment with throttle input arm 14. This alignment results from an absence of trimming operation by the trim motor 12 as can be seen from the vertical orientation of the trim arm 42.

If a system for controlling throttle trim operation demands fuel flow at a rate greater than that requested by the flight crew through positioning of the throttle lever 17, a command signal will be sent to the trim motor 12 to produce a counter clockwise rotation of the trim arm 42, such as to the position illustrated in Figure 3. This causes the lower portion of the input mixing arm 34 to be displaced to the left as shown in Figure 3 and changes the angular position of the axis of the elongated slot 33. As a result, the relative positions of heads 32 and 48 must shift as they are physically constrained to remain in alignment along the axis of the elongated slot mixing arm 34.

Because of the physical construction of the fuel control system, and the trim mixer 10, the throttle dowel 26 and its head 32 are held in position much more firmly than are the dowel 46 and head 48 of the output arm 44. Thus, the output head 48 will be displaced to the right as seen in the figure by a predetermined amount "b" corresponding to the action of the trim motor 12, and the displacement of the trimming head 38 by an amount "a" while the throttle head 32, and correspondingly the throttle input arm 14 and cockpit power level 17, will remain unmoved. The resulting displacement between the throttle input arm 14 and output arm 44 causes the rate of fuel flow to be increased by the desired amount. It will be readily apparent that rotation of the trim motor 12 in the opposite direction will produce a resultant decrease in the rate of fuel flow without any motion of the power levers 17.

As the input arm 14 moves away from the position shown in Figures 1—3 interaction of the cam 30 and cam follower 28 will move the axis of dowels 26 and 46 closer together. This will bring the axes of head 32 and 48 closer together and result in the amount of change in position of the output lever 44 corresponding to action of the trim motor 12 being reduced. Thus, by providing a suitable shape for the cam surface 29, the trim authority limits can be precisely defined.

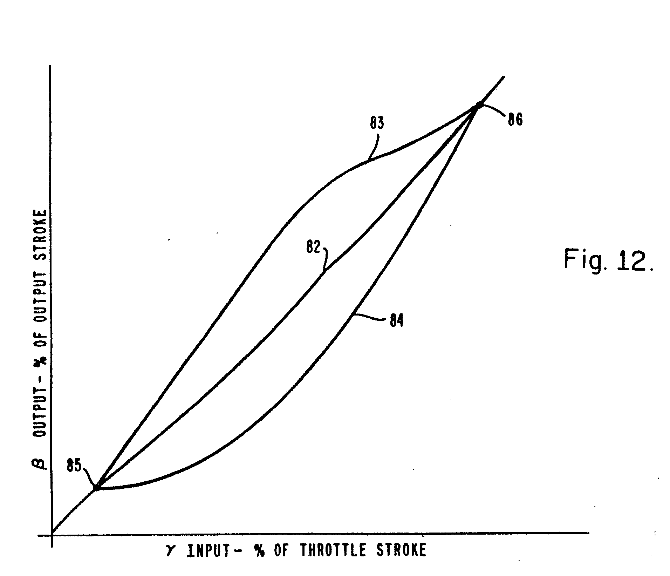

While many cam shapes and corresponding trim authority envelopes are possible, Figure 12 illustrates a typical curve wherein position of the throttle input arm 14 is plotted along the horizontal axis and position of the output arm 44 is plotted along the vertical axis. A line 82 illustrates the co-ordinated motion of input and output arms without any trimming thereof. Curves 83 and 84 illustrate the authority limits of trim operation permitted by the variable authority trim mixer 10 as programmed through control of the shape of the cam surface 29. The lower portions of cam surface 29 where the heads 32 and 48 are caused to be more widely spaced, permit greater excursions from line 82 while the higher portions, where heads 32 and 48 are caused to be closest, permit reduced excursions from line 82.

It is also desirable to terminate the ability of trim motor 12 to affect the position of output dowel 46 and the output arm 44 when the throttle input arm 14, is in selected critical portions of its stroke, such as outside the points 85 and 86 on line 82 of Figure 12. This is accomplished by designing cam 30 so that it will align the axis of throttle dowel 26 and head 32 with those of output dowel 46 and head 48 during the critical portions of the stroke.

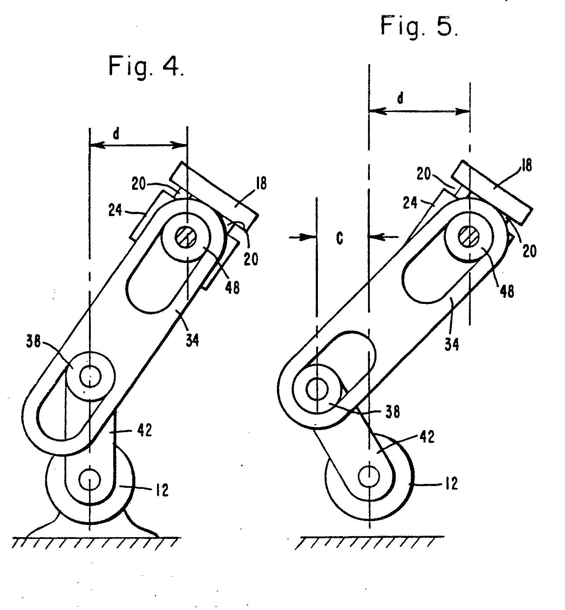

This situation is depicted in Figures 4 and 5, which illustrates the throttle input arm 14 and correspondingly the output arm 44 as having been rotated to near the extreme upper end of its stroke.

Figure 4, the trim arm 42 is shown in a vertical orientation which, as discussed with respect to Figures 2 and 3, is the centered position which does not produce any change in relative position of the output arm 44, and throttle input arm 14. Thus, throttle input arm 14 and output arm 44 are aligned.

In Figure 5, the trim motor 12 has caused the trim arm 42 to rotate in the same manner as shown in Figure 3, and displace the trim head 38 a distance "c" from its centre line. This motion demands an increase in the rate of fuel flow beyond that requested by the position of the throttle levers 17. While the mixer arm 34 does rotate, as in Figure 3, around the stationary throttle head 32 of dowel 26, this does not cause any change in position of the output arm 44 or dowel 46 because of the axial alignment of the dowels 46 and 26. Thus, regardless of the amount of trimming called for by action of the trim motor 12, and the corresponding displacement of the trimming head 38, by an amount "c" from its centered position, the output arm 44 will remain aligned with the throttle input arm 14 so that fuel is fed to the engines precisely as demanded by the flight crew at critical portions of the power lever stroke at which the cam 30 is programmed to cause axial alignment of dowels 26 and 46. This is graphically illustrated in Figures 4 and 5, by the fact that output head 48 remains at a fixed distance "d" from its midstroke position with and without trimming.

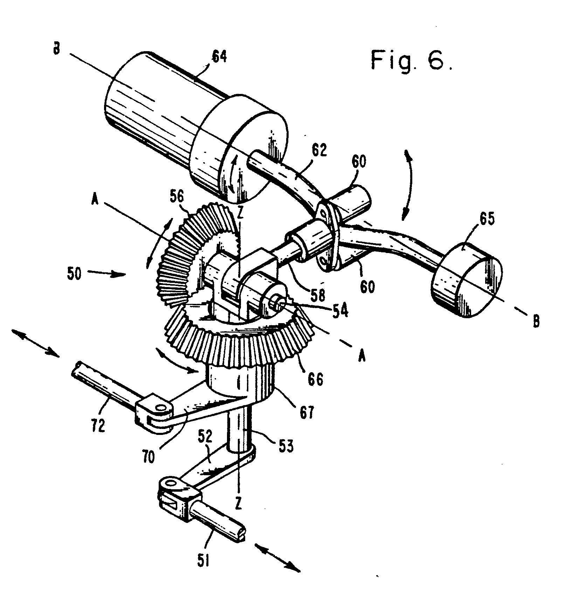

Referring now to Figure 6, an alternative embodiment of the variable authority trim mixer of the present invention is shown, generally designated by the reference numeral 50. A throttle input arm 52 receives an input from linkage member 51 which is connected at one end to one of the throttle levers 17 of the aircraft 13 in a manner previously described, so as to rotate a shaft 53 which is affixed to the other end of throttle input arm 52 about an axis ZZ which is fixed with reference to ground. As the drawings illustrate the top of shaft 53 is suitably constructed to receive and hold a shaft 54 for rotation about an axis AA. Axis AA forms a right angle with axis ZZ. A generally vertical bevel gear 56 is suitably secured to the end of the shaft 54 to rotate therewith.

One end of a trim input arm 58 is preferably bored, placed on shaft 54 and pinned thereto so as to be locked in a fixed relationship with respect thereto to hold shaft 54 atop shaft 53. A pair of spaced followers 60 are affixed to the opposite end of the shaft 58 and axially extend generally parallel thereto to wipe across a cam element 62.

The cam element 62 is a rod which preferably has straight end portions and a central portion which may be bowed either towards or away from the arm 58, and is affixed for rotation at one end to a trim motor 64 (operation of which is similar to that of the trim motor 12 of the previous embodiment) and is mounted on suitable bearings 65 at its other end. If desired a feedback sensor (not shown) may be used to sense the position of the cam for control purposes.

Cam 62 is mounted for rotation about an axis BB. Cam 62 both activates the trim input arm 58 and by virtue of its shape contains the authority limits for trim input as will be more fully described herein below.

A second bevel gear 66 is provided atop a hub 67 and both are concentrically arranged about axis ZZ outside shaft 53 to be rotatable thereabout. Suitable bearing members are arranged in an inner cavity (not shown) of hub 67 to allow hub 67 to be rotated independently of shaft 53. Bevel gear 66 is in constant toothed engagement with bevel gear 56 and suitable means (not shown) are supplied to maintain that relationship.

An output arm 70 is suitably secured to or integrally formed with hub 67 to be rotatable therewith. Affixed to the opposite end of output arm 70 is a linkage member 72 which is connected to the fuel metering device 49 (Figure 14).

In operation, motion of the engine control power lever 17 is conveyed through linkage member 51 and throttle input arm 52 to shaft 53 which rotates about axis ZZ. As a result, cam followers 60 also rotate around axis ZZ so as to move laterally along cam element 62. Assuming cam element 62 to be in the centered position shown in Figure 6 with the bowed central portion extending directly toward the shaft 158, action of the output arm 70 will not be affected by the cam element. Bevel gear 56 is also caused to move about axis ZZ. However, because it is fixed to shaft 54 which is in turn pinned to trim input arm 58, bevel gear 56 will not rotate about its axis AA. Bevel gear 56 remains engaged with gear 66 and forces gear 66 to rotate about axis ZZ by an equal amount. This motion rotates hub 67 such that output arm 70 moves linkage member 72 to adjust the fuel metering device 49 (Figure 14) in direct response to throttle lever 17 position.

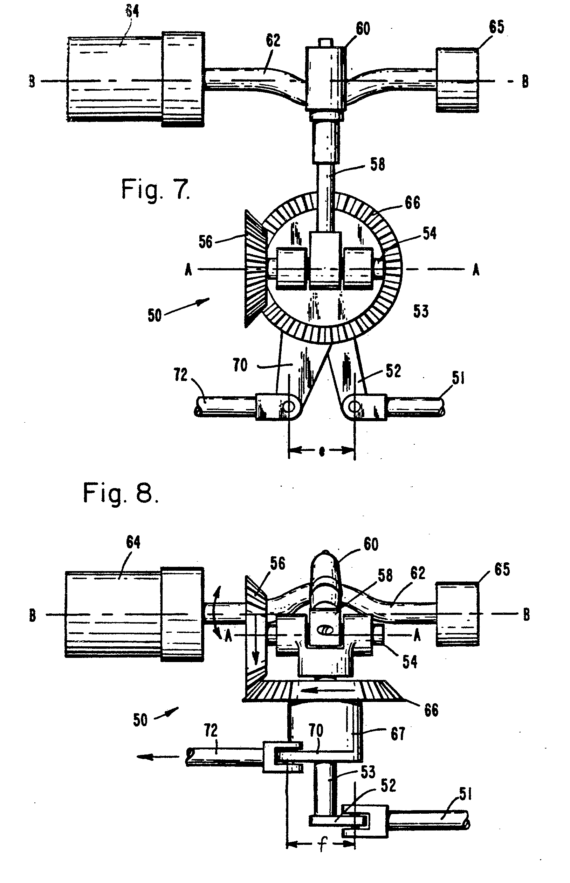

The operation described is without trim action and results in motion of the linkage member 72 which is coincident with the motion of linkage member 51. Thus, the distance between throttle input arm 52 and output arm 70, as indicated by the distance 'e' in Figure 7, remain unchanged. Action of the cam motor 64 in response to a suitable control system can act to change this distance and change the rate of fuel flow resulting from a set position of the engine power levers 17.

The trimming operation of the second embodiment of the present invention is best understood by reference to Figures 6—10. Referring specifically to Figures 7 and 8, the relative position of the individual elements of the second embodiment are shown when the throttle level 17 is generally midway through its stroke. The throttle lever 17 position setting has imparted through linkage member 51, throttle input arm 52, and shaft 53 a sufficient rotation of shaft 53 to cause axis AA to be generally parallel with axis BB. When this alignment occurs, followers 60 which are affixed to the end of shaft 58, are generally intermediate the ends of cam element 62.

Figure 7 shows the cam element 62 in its generally flattened centered position. Figure 8 shows the same element 62 as rotated from its centered position in Figure 7 through an angle of sufficient degree to thereby pivot followers 60, shaft 58, shaft 54 and bevel gear 56 about axis AA. This rotation does not affect the position of the throttle levers 17, shaft 53, throttle input arm 52 or linkage member 51 because the throttle input arm 52 has been relatively locked through proper manipulation of locating mechanism at the throttle quadrant 15 and the high amount of drag associated with the linkage connecting throttle levers 17, with the trim mixers. However, this rotation of the aforementioned elements about axis AA, and more specifically bevel gear 56, causes bevel gear 66, hub 67, and output arm 70 to rotate about axis ZZ thereby imparting a motion to linkage member 72 which is connected to the fuel metering device 49 (Figure 14) to demand increased fuel flow to the engine without movement of throttle input arm 52. This results in a change in the distance between the throttle input arm 52 and the output arm 70 to that indicated by the distance "f" in Figure 8 so that the rate of fuel flow to the engine differs from that commanded by power lever setting by an amount corresponding to the difference between distances "e" and "f". Clearly, this amount of trim depends on the amount of rotation of the cam element 62 caused by the trim motor 64. Whether the change is an increase or a decrease depends on the direction of rotation of the cam element 62.

While many contours for the cam element 62 are possible, it has been illustrated in a manner which will also provide a trim authority envelope similar to that illustrated in Figure 12. As action of linkage member 51 rotates shaft 53 and moves followers 60 from the central position along cam elements 62, the amount of possible displacement and corresponding trimming action are reduced.

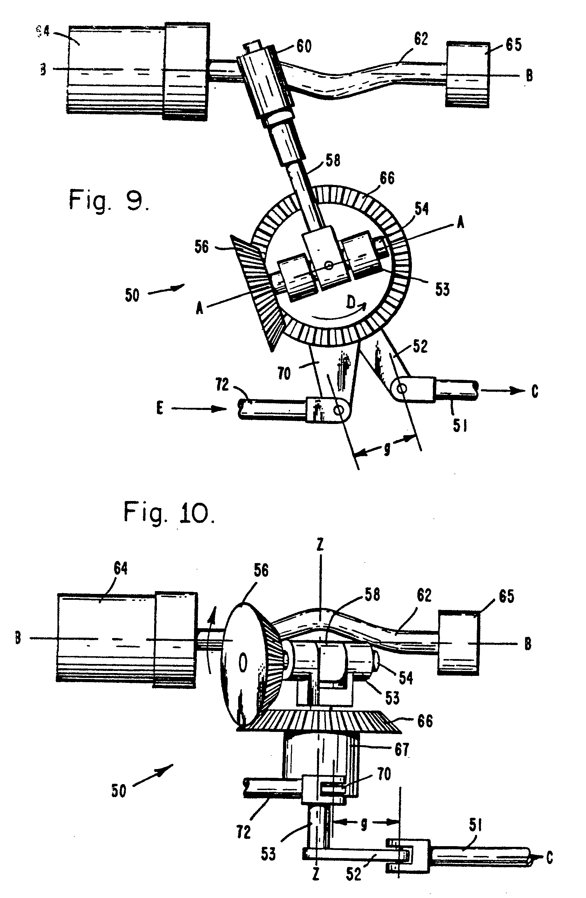

Figures 9 and 10 illustrate the operation when the pilot has pulled the throttle to near its lower extremity thereby commanding a near minimal amount of fuel flow to the engine. This is accomplished by rotation of input arm 52 by movement of linkage member 51 in the direction of arrow 'C' in Figures 9 and 10 to cause rotation of shaft 53 about axis ZZ. As is best seen in Figure 9, this causes axis AA to move and causes followers 60 to wipe across the centered cam 62 and move to the extreme end generally near the trim actuator motor 64. This movement just described does not cause rotation of bevel gear 66 about axis AA because of the action of cam followers 60 with cam 62, which serves to essentially freeze bevel gear 56 with respect to axis AA thereby moving bevel gear 66 about axis ZZ in the direction of arrow 'D'. As should be readily apparent this movement about axis ZZ causes hub 67, output arm 70, and linkage member 72 to imitate the motions of their counterpart input members and move in the direction of arrow E, thereby maintaining the distance between arms 52 and 70 a constant distance "g", which is equal to the distance "e" in Figure 7, apart. Thus, the fuel metering device 49 (Figure 14) is set to allow only a minimum amount of fuel to flow to the engine.

A comparison of Figures 9 and 10 quickly illustrates that rotation of the cam 62 through action of the cam trim actuator motor 64 has no effect upon the rate of fuel flow because the followers are aligned with the straight portion of the cam 62 and not with the bowed central portion as in Figures 7 and 8. Thus, rotation of cam element 62 from its position in Figure 9 to its position in Figure 10, to demand more fuel, or downwardly into a mirror image position to demand less fuel, will have no effect because the bowed portion will not move followers 60 either upwardly or downwardly to rotate input arm 58 or shaft 54. This therefore leaves bevel gears 56 and 66, output arm 70, and linkage member 72 undisturbed and the fuel flow rate to the engine continues at present rate despite rotation of the cam 62.

While most of the discussion presented with respect to the second embodiment has dealt with a cam which is bowed in the centre, it should be apparent to those skilled in the art that any pattern or behavior which is desired may be achieved by alteration of the cam or provision of another cam which has the capability to achieve the desired trim characteristics. In a similar vein, rotation of the cam element 62 to a starting or centered position which is 180 degrees displaced from that shown in the drawings so that the cam element is bowed away from the shaft 58 will allow for a greater degree of cam element rotation with which to activate trim input arm 58 and thereby permit more precise fine tuning or trim actuation.

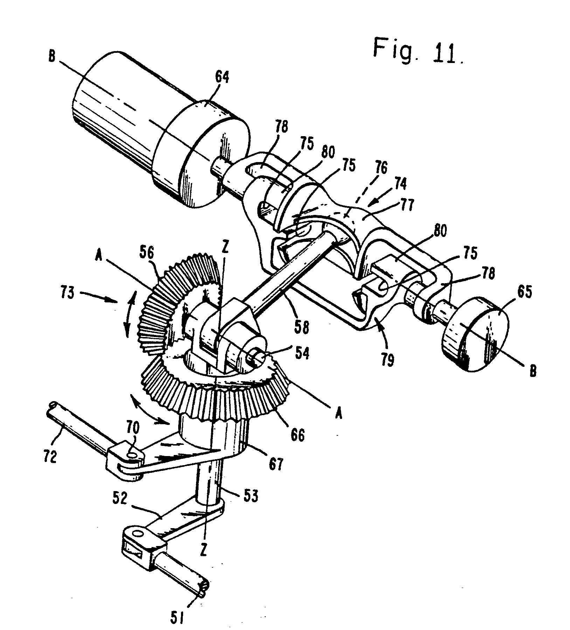

Referring now to Figure 11, a third embodiment in the form of a variable authority trim mixer 73 is shown which differs from the second embodiment in only minor ways. For ease of understanding, elements of this embodiment identical to elements for the embodiment of Figure 6 have been given the same reference numerals.

As in Figure 6, throttle input through linkage member 51 is translated through, interaction of bevel gears 56 and 66 to produce a corresponding motion of linkage member 72 and cam action resulting in rotation of bevel gear 56 about its axis produces trimming by increasing or decreasing the distance between the ends of throttle input arm 52 and output arm 70.

The principal distinction lies in the structure of a cam 74 driven by trim motor 64. The cam 74 is a female member in the form of a hollowed channel 75 which receives a single male follower element 76 which is secured to the end of trim input arm 58 to interact with cam 74 in a fashion equivalent to second embodiment counterparts. The cam 74 is constructed of two pieces. A bowed central portion 77 is fixed to trim motor 64 and bearing 65, to rotate about axis BB by a pair of sleeves 78. An outer portion 79 is fixed and nonmoving with respect to ground to correspond to the straightened ends of cam 62 in the second embodiment, and includes a pair of lobes 80 which axially flank the bowed central portion 77 of the cam 74. The centered nonactivated position for the bowed rotatable central portion 77, is oriented 180 degrees from that of the illustrated form of second embodiment. The channel 75, extends through both lobes 80 and the central bowed portion 77.

When the trim mixer 73 is rotated through throttle quadrant input so that the male follower 76 is in the portion of the channel 75 which is located in either of the lobes 80, activation of the trim motor 64 will not rotate trim input arm 58 and therefore not disturb the flow of fuel to the engine. However, when the male follower 76 is in the portion of the channel 75, in the central rotatable bowed member 77 of cam 74, rotation thereof through activation of the trim motor 64 will cause movement of the trim input arm 158 to influence the flow of fuel to the engine without movement of the throttle levers 17.

The variable authority trim mixers 10, 50, 73 of the present invention therefore provide a device which can mix a primary throttle lever 17 input with a trimming input and permit a cam input to limit the effect of the trimming input in a programmed manner such that a single output is transmitted to the fuel metering device 49 (Figure 14) of the engine. The constructions described allow the mixers of the present invention to throughput throttle lever 17 fuel commands to the engine even in the event of trim actuator failure through a direct mechanical link· from the throttle lever 17 through the mixer. It should also be apparent to those skilled in the art that the input and output elements of the variable authority trim mixers 10, 50 and 73 may be preloaded with springs or other means to prevent backlash.

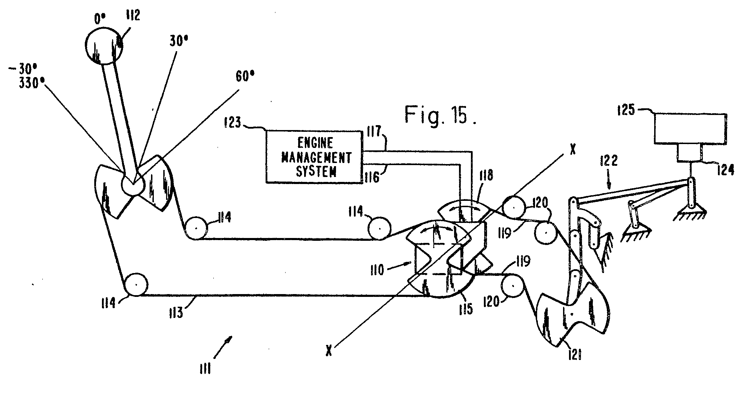

Figure 15 shows diagrammatically an enclosed differential throttle linkage control 110 according to the present invention, in use with a fuel flow control system 111 of the type typically used in aircraft. For purposes of the present illustration, the 0° position of the throttle lever 112 corresponds to engine idle; 30°, to midstroke for forward thrust; 60° to full stroke or full forward thrust; and —30°, (or 330°) to midstroke for reverse thrust.

The desired fuel flow rate command is determined by the position of the throttle lever 112, and transmitted to the throttle linkage control 110 through cable 113, idlers 114 and input cable quadrant 115. Input cable quadrant 115 is rotatable about axis X—X and its position relative to its extreme limits of motion, correspond to the relative position of the throttle lever 112 to its extreme limits of motion.

Throttle linkage control 110, also receives an electrical trimming input command from an "Engine Management System" 123 through line 116. The electrical trimming input drives an electric motor (not shown in the drawings) to vary the fuel flow rate command of the throttle lever 112, without movement thereof. The throttle linkage control 110, algebraically sums the two input commands into a single output command. The position of the electric motor, relative to its extreme limits of motion, is read by a position sensor (not shown in the drawings) and transmitted to the "Engine Management System" 123 via a feedback line 117.

The single output command, as will be more fully discussed herein below, drives output cable quadrant 118 to rotate about axis X—X. The output command is transmitted to the fuel metering device 124 of the engine 125 by cable 119, idlers 120, output cable quadrant 121 and lever assembly 112 in a manner well known in the art.

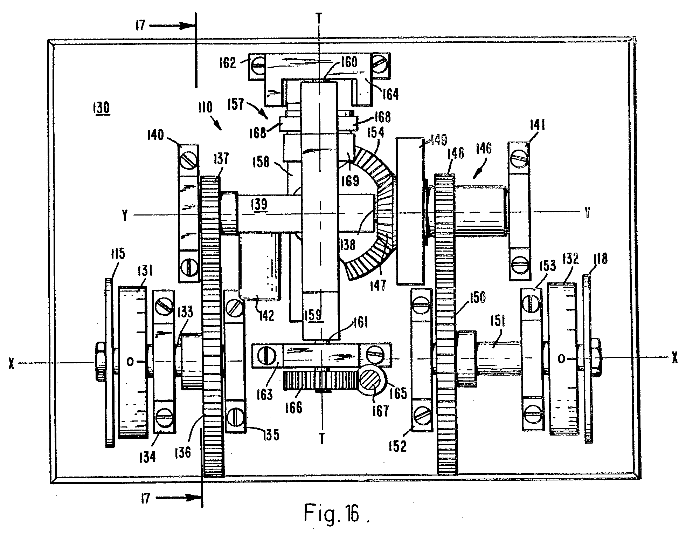

Referring now to Figures 16—30, the unhoused planetary gear assembly of the throttle linkage control 110 of the present invention is shown in detail and as mounted upon base member 130. Base member 130, in use, is grounded to the air frame. Graduated input and output dials 131 and 132 respectively, are shown in the drawings to illustrate operation but are not necessary for operation of the actual embodiment.

The throttle linkage control 110 is shown to include throttle input axle 133 mounted for rotation with input cable quadrant 115 and suspended for rotation about axis X—X by supports 134 and 135 and bearings (not shown in the drawings). Input spur gear 136 is rigidly attached to or integral with, input axle 133 for rotation therewith in response to movement of throttle lever 112.

Input spur gear 136 is in constant toothed engagement with input spur pinion 137 which is rigidly affixed to, or integral with, a portion of a central rotating assembly axle 138 for rotation about axis Y—Y. A planet carrier 139 is also rigidly affixed to axle 138 for rotation about axis Y—Y. Axle 138 is supported for rotation by supports 140 and 141 and bearings (not shown in the drawings). Weight 142 is affixed to planet carrier 139 by a suitable means for balance purposes.

A one piece rotatable mixer assembly 146 which includes beveled sun gear 147 and output spur pinion 148, is supported for independent rotation about axis Y—Y and axle 138 by suitable bearings (not shown in the drawings), and support member 149. Output spur pinion 148 is in constant toothed engagement with output spur gear 150.

Output spur gear 150 is ridigly affixed to, or integral with, output axle 151 for rotation therewith about axis X—X although, it should be readily apparent to those skilled in the art that the axis of output axle 151 need not be coincident with axis X—X. Output axle 151 is suitably supported for rotation by bearings (not shown in the drawings) and supports 152 and 153. Output cable quadrant 118, is rigidly affixed to the end of output axle 151 and thereby transmits the output command of the throttle linkage control 110, to the engine 125 as illustrated in Figure 15.

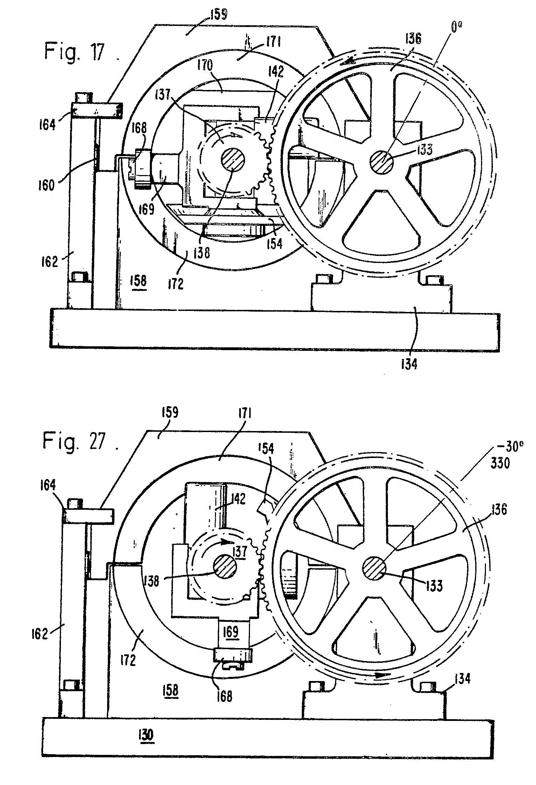

Beveled sun gear 147, is in constant toothed engagement with planet gear 154. Planet gear 154 is revolved about axis Y—Y by rotation of input spur pinion 137 through movement of throttle lever 112, as more fully described herein below with reference to Figures 17—27, and 28—30. The revolution of planet gear 154 about axis Y—Y translates into rotational movement of sun gear 147, output spur pinion and gear 148 and 150, and thus affects the fuel flow rate to the engine as previously described.

The throttle linkage control 110, also includes a cam assembly, 157. A fixed cam portion 158 is affixed to the base 130. A movable cam portion 159 includes protuberances or trunnions 160 and 161 integral therewith which are journaled for rotation in supports 162 and 163 to allow rotation of movable cam portion 159 about axis T—T. Support 162 includes stop member 164 atop thereof which intersects the path of movable cam portion 159 and thereby limits the movement thereof about axis T—T to approximately 10° to 14° of up or down trim rotation from its centered upright or, neutral, position. It should however, be noted that the amount of trim may, within practical limits, be extended beyond these parameters.

Movable, cam portion 159 is rotated about axis T—T by the interaction of a worm 165 with gear 166 which is rigidly secured to the end of protuberance 161 which extends beyond support 163. The shaft 167 of worm 165 is driven either clockwise or counterclockwise by the electric motor (not shown in the drawings) which receives inputs through lines 116 (Figure 1.15) from the "Engine Management System" 123. The bottom of worm shaft 165 is suitably secured to base 130 for rotation.

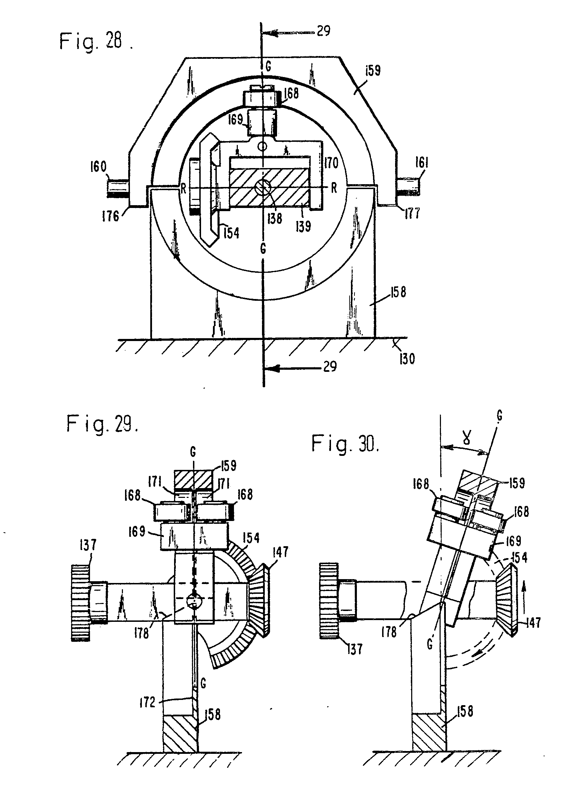

Figures 16—26 also show a pair of cam followers 168 mounted upon gimbal block 169, the operation and inter-relationship of which is best understood by reference to Figures 28—30. As shown in Figure 28, the throttle linkage control 110 includes a cam follower yoke assembly 170, which is rotatable about axis R—R. Cam follower yoke assembly 170 is mounted for said rotation upon planet carrier 139, so as to be revolvable about axis Y—Y in response to throttle lever 112 inputs. Planet gear 154, is rigidly secured, to, or formed integral with, cam follower yoke assembly 170 to be revolvable about axis Y—Y in response to throttle lever 112 inputs at all times, and rotatable about axis R—R in response to trim inputs, when cam followers 168 are in contact with movable cam portion 159. Cam followers 168 are secured to gimbal block 169 which is rotatable about axis G—G to allow cam followers 168 to cross from movable to fixed cam portions 159 and 158 respectively, (and vice versa), without binding. Axis G—G forms a right angle with axis R—R.

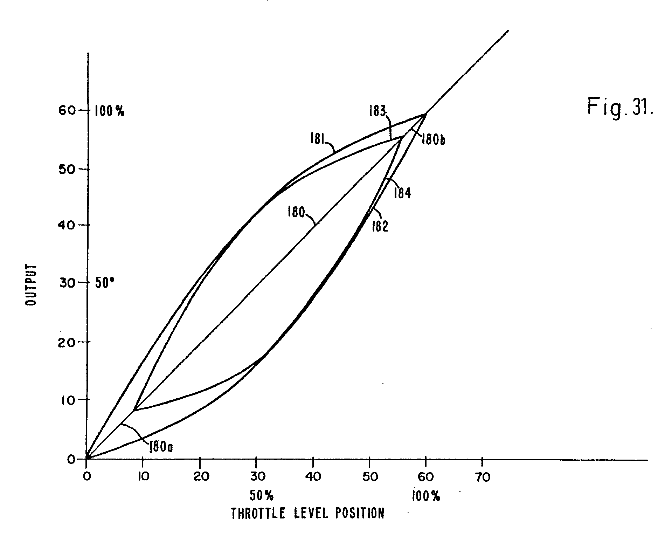

Referring now to Figures 29 and 30, movable cam portion 159 is shown to include cam follower races 171 in which the cam followers 168 ride. Fixed cam portion 158 is similarly provided with cam follower race 172.

When cam followers 168 are in contact with movable cam portion 159, as shown in Figure 30, and movable cam portion 159 is rotated about axis T—T by an amount $\gamma$, cam followers 168, gimbal block 169, cam follower yoke assembly, 170, and planet gear 154, rotate about axis R—R by an amount $\beta$ determined by the relationship between axis T—T and G—G with maximum $\beta$ movement achieved when said axes are perpendicular. This movement results in a gain or loss in the throttle lever commanded fuel flow rate through sun gear 147 without movement of either the throttle lever 112 or input spur pinion 137.

As can best be seen in Figure 28, movable cam portion 159 is formed to include depending skirt portions 176 and 177. The inside distance between skirt portions 176, and 177, is slightly larger than the outside distance between the ends of fixed cam portion 158. A portion of protuberances 160 and 161 extend from skirt portions 176 and 177, respectively and are journalled for rotation by supports 162 and 163 so that axis T—T divides the space between fixed and movable cam portions 158 and 159. As best seen in Figures 29 and 30, axis T—T is aligned near the leading edges of fixed cam 158, and fixed cam 158 is provided with beveled edge 178 to allow for generally interference free limited rotation of movable cam portion 159 about axis T—T.

The operation of the throttle linkage control 110 is best understood by grouping the drawings according to the position of the throttle lever 112. All items previously described herein are identified by the same reference characters throughout.

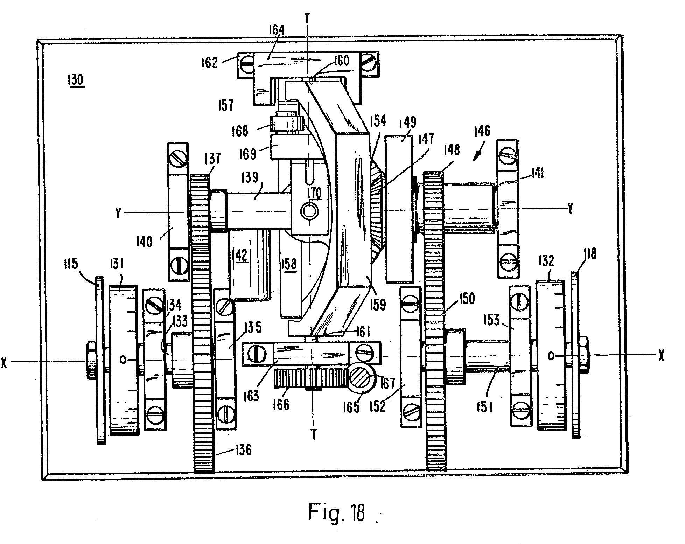

Figures 16 and 17 show the control 110 when the throttle lever 112 is in the 0° or engine idle position and there are no trim inputs i.e. movable cam portion 159 is in the centered upright position, while Figure 18 shows the same throttle lever setting with the movable cam portion. 159, in a full downtrim position. As can best be seen in Figure 17, cam followers 168, are not in contact with movable cam portion 159, so that rotation of the worm 165, in response to up or down trim commands, which move the movable cam 159 from the centered position as shown in Figure 16 to, for example, the full down trim position as shown in Figure 18, does not alter the output from that commanded from the throttle lever 112 position. This can be visually verified by viewing the input and output dials, 31 and 32, in Figures 16 and 18. The result would be identical for an uptrim command induced opposite rotation of movable cam 159.

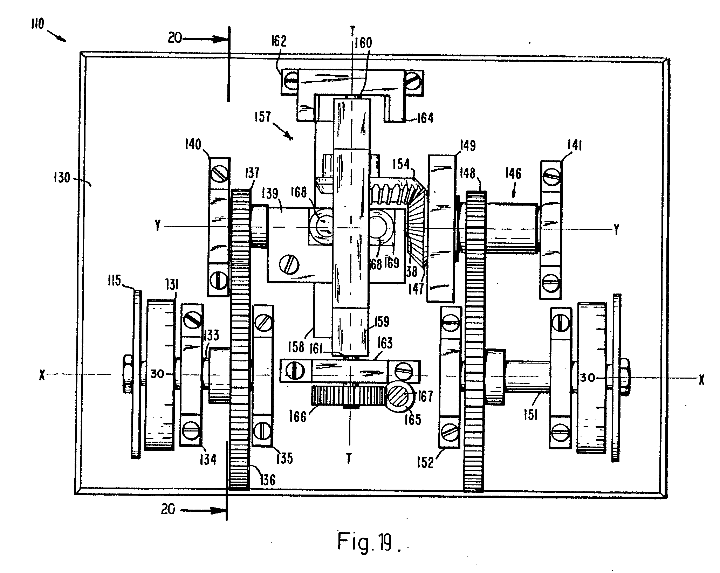

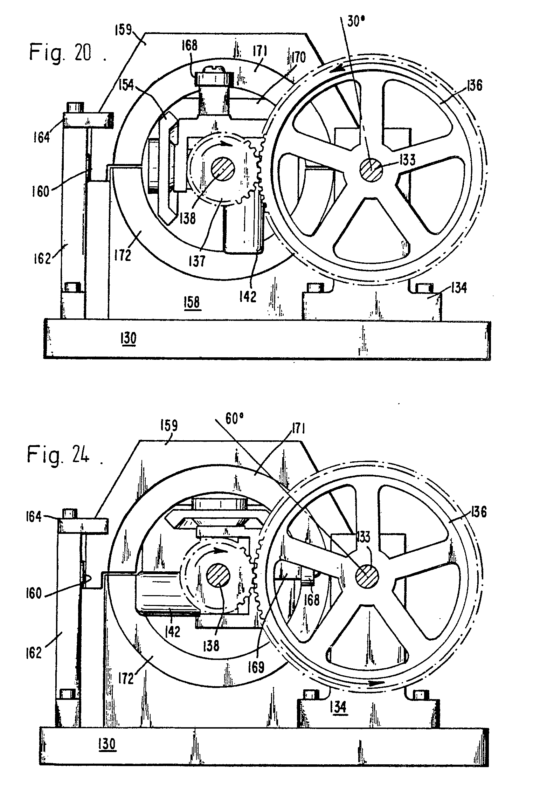

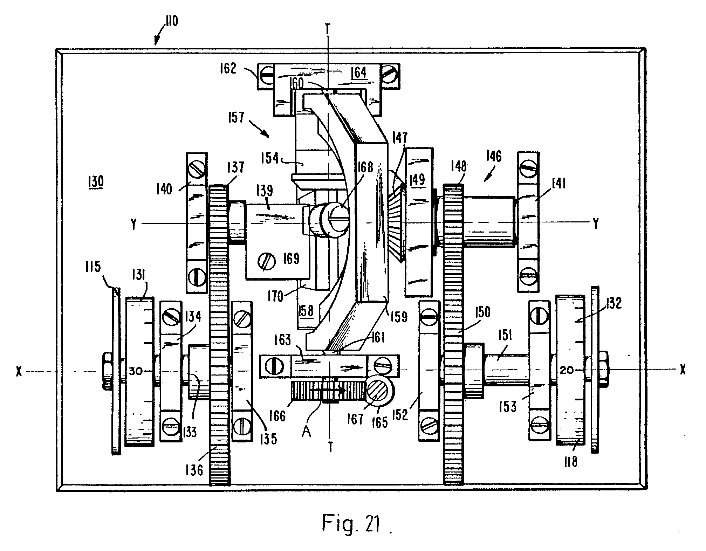

Rotation of the throttle lever 112, from the idle, 0°, position shown in Figure 16, to the midstroke 30°, position shown in Figure 19 and 20 causes a corresponding rotation of input axle 133, input spur gear 136, input spur pinion 137, planet carrier 139, and cam followers 168. Planet gear 154, is revolved about axis Y—Y thereby rotating sun gear 147, output spur pinion and gear, 148 and 150 and output axle 151, thereby demanding an increased fuel flow rate, as can be verified by comparing input and output dials 131 and 132 in Figures 16 and 19. As best shown in Figure 20, this aligns cam followers 168 with the high point of movable cam portions 159 and thus perpendicularly orients axes T—T and G—G. When the cam followers 168, are thus aligned, trim down inputs from the "Engine Management System" cause clockwise rotation of worm 165, and rotation of gear 166 and movable cam portion 159 about axis T—T in the direction shown by arrow 'A' in Figure 21. Thus, cam followers 168 are revolved about axis R—R and yoke assembly 170, and planet gear 154 are rotated about axis R—R (Figure 28) causing rotation of sun gear 147 output spur pinion and gear 148 and 150, and axle 151 to alter the fuel flow rate command of the throttle lever 112 setting without movement thereof or its interconnected drive train members i.e. input gear and pinion, 136 and 137, or axle 138. As Figure 21 clearly illustrates, the throttle lever is set at 30°, i.e. midstroke forward thrust, but after the downtrim input rotation of movable cam portion 159, as described, the output command to the engine through axle 151 is for 20° i.e. one third full forward thrust.

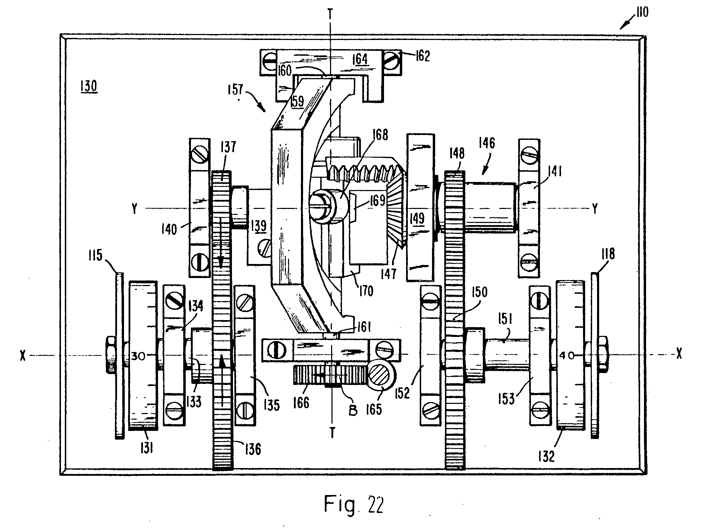

Up trim of the system 110, with throttle lever 112 at midstroke forward thrust is depicted in Figure 22 and is accomplished through counterclockwise rotation of worm 165. Gear 166 is rotated in the direction of arrow 'B' and movabnle cam portion 159, is rotated about axis T—T. Cam followers 168 are revolved about axis R—R and yoke assembly 170, and planet gear 154 are thus rotated about axis R—R (Figure 28). Through the interaction of sun gear 147 with planet gear 154, the fuel flow rate command is thus uptrimmed without movement of the throttle lever 112. Thus, while the input dial 131 in Figure 22 shows a 30°, half-stroke forward thrust position, output dial 132, shows a fuel flow rate command to the engine of 40° i.e. two thirds forward thrust.

It should be apparent in light of the above discussion and reference to Figure 28, that when the throttle lever is in the midstroke forward thrust position, axes G—G and T—T are perpendicular. As previously stated, it is this condition which allows maximum trim induced excursion from the fuel flow rate command of the throttle lever 112 since cam followers 168, then intersect the largest portion of the arcuate path cut by movable cam portion 159, when it moves about axis T—T. However, some degree of excursion is permitted whenever the cam followers are in contact with the movable cam portion 159, and it is not until axis G—G becomes coincident to axis T—T or cam followers 168 are in contact with fixed cam portion 158, that trim induced excursion will not occur.

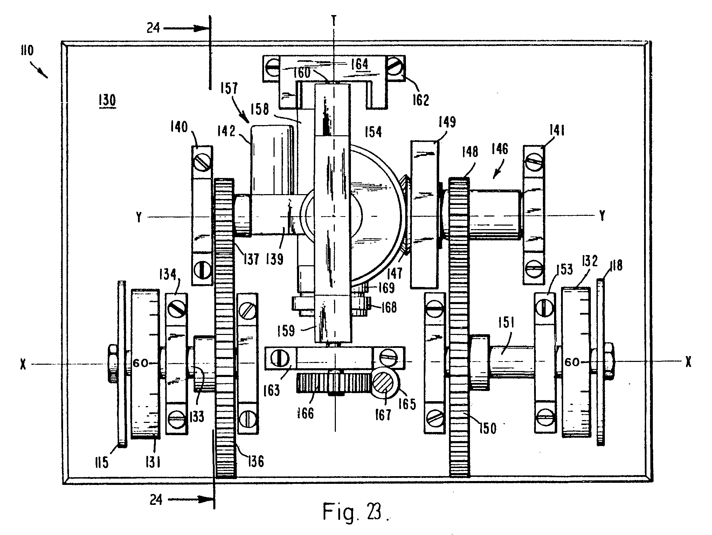

The full forward thrust configuration of throttle linkage control 110 is depicted in Figures 23, 24, and 25. Rotation of throttle lever 112 from the midstroke (Figure 19) to the full forward thrust position i.e. 60°, causes rotation of input spur gear and pinion 136, and 137, axle 138, carrier assembly 139, yoke assembly 170, and cam follower 168. Planet gear 154 is revolved about axis Y—Y into the position shown and the cam followers 168 move across and eventually off the movable cam race 171 onto the fixed cam race 172. Engagement of planet gear 154 with sun gear 147 causes a corresponding rotation thereof and through output spur gear and pinion, 50 and 48 and output axle 51, demands maximum fuel and flow to the engine.

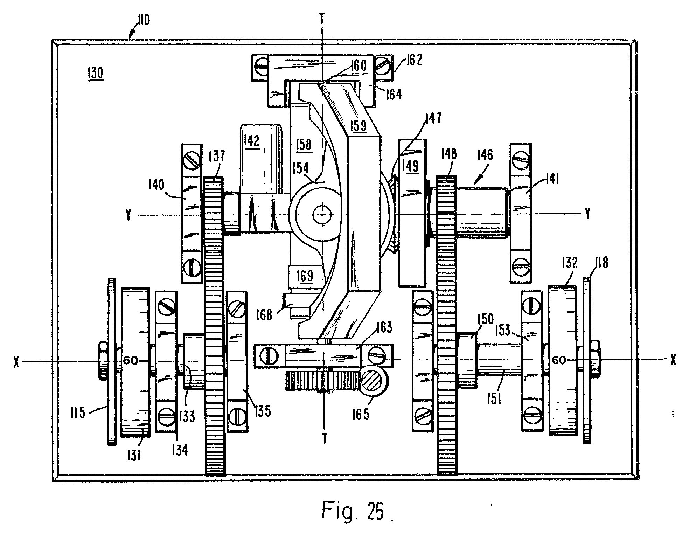

With the cam followers, thus in contact with fixed cam portion 158, an up or downtrim command, as illustrated in Figure 25 has no effect upon output. This again is the result of the fact that while movable cam portion 159, is rotatable about axis T—T, from its centered upright position (Figure 23 and 24), such rotation cannot affect cam followers 68, because of their position, and thus planet gear 154 does not rotate about axis R—R (Figure 28) to demand a fuel flow rate which differs from that commanded by the throttle lever 112, position. Thus, when the throttle lever 112 is in full forward thrust, the input dial reads 60° and despite trim input induced rotation of movable cam 159, about axis T—T (Figure 25), output dial 132 also reads 60° or full forward thrust.

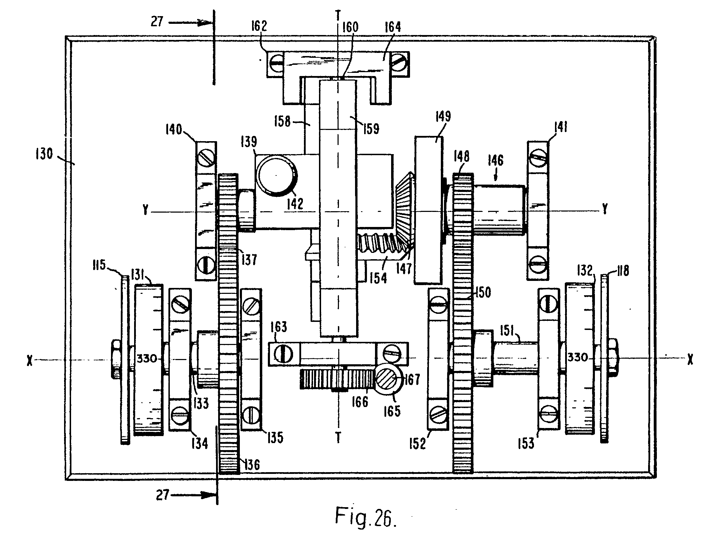

Referring now to Figures 26 and 27, and comparing to Figures 16 and 17, for discussion of reverse thrust operation, it is seen that pulling the throttle lever 112, back from the 0°, engine idle position, to the mid-reverse thrust position, minus 30° (330° dial reading) rotates input spur gear and pinion, 136 and 137, axle 138, carrier 139, and yoke assembly 170, about axis Y—Y. Planet gear 154 is revolved about axis Y—Y and because of its engagement with sun gear 147 causes rotation of output spur gear and pinion, 150 and 158, output axle 151, and output cable quadrant 118. Matching readings will be obtained on both input and output dials 131 and 132, at all times since cam followers 168 are in contact with fixed cam portion 158, and thus remain unaffected by trim input induced rotation (not shown in drawings) of movable cam element 159.

As described herein the throttle linkage control 110 of the present invention contemplates approximately 180° of cam follower 168 rotation about axis Y—Y in response to 60° of forward thrust rotation of throttle lever 112. Cam followers 168 are in contact with movable cam portion 159 during nearly all of the forward thrust positions except engine idle (0°) or full forward thrust (60°) i.e. when axes R—R and T—T are coincident. The remaining 180° of cam follower 168 rotation is dedicated to reverse thrust operations and locates cam followers 168, in contact with only fixed cam portion 158.

Axes Y—Y, T—T, G—G and R—R share a common point in space at all times. This arrangement allows for compact reliable construction and ease of repair.

It should be readily apparent that through proper selection of additional input and output gearing, and lever assembly 122 (Figure 15), the amount of cam follower 168 reverse thrust rotation can be substantially decreased. This allows for substantially more than 180° of forward thrust rotation of cam followers 168, and thus a wider band of positions near engine idle and full forward thrust, where trim inputs will not affect output.

Like Figure 12, Figure 31 is a graph of the forward thrust output of a throttle linkage control according to the present invention, for given throttle lever 112 positions. The line 180 depicts output for a given throttle lever 112 setting in the absence of trim inputs through movable cam 159. The curve 181, depicts the maximum output for a given throttle lever 112 setting when combined with uptrim inputs. Curve 182 depicts the minimum output for a given throttle lever setting when combined with downtrim inputs. Clearly, any output between curves 181 and 182 may be achieved through the use of the present invention dependent only upon the throttle lever 112 position and the amount of trim input. This graph is generated by the simple cam arrangement, illustrated in the drawings. Clearly, more complex contouring of movable cam portion 159, would result in a different set of curves 181, 182, and straight line 180.

Alteration of the device 110 to allow for more forward thrust rotation of cam followers 168, onto fixed cam portion 158, at the upper and lower extremes of throttle lever 112 input would generate output boundaries as shown by line 180 and curves 183 and 184. Line portions 180a and 180b represent the extended portions of throttle lever 112, forward thrust stroke, during which cam followers 168 are in contact with fixed cam 158, and thus remain unaffected by movement of movable cam portion 159 about an axis T—T.

Similarly, standard anti-backlash measures may be employed with the present invention to eliminate system hysteresis. Ideally, the throttle linkage control 110 is located as near to the engine as possible, to further eliminate system hysteresis and improve fuel economy.

## Claims

1. A mechanical variable authority fuel control system for an engine comprising input means (14, 51, 115) responsive to a basic signal from a throttle control member demanding a desired basic rate of flow of fuel, an output member (44, 72, 118) which is responsive to the input means and of which the movement forms an output signal controlling metering means (49) to determine the actual flow of fuel, trim means (12, 64, 166) responsive to a trim signal arranged to vary the output signal result from a given position of the input means; characterised by modifying means (30, 62, 159) mechanically dependent on the position of the input means for modifying the variation of the position of the output member produced by a given movement of the trim means.

2. A system as claimed in Claim 1 in which the trim signal is a function of at least one engine parameter or flight parameter.

3. A system as claimed in Claim 1 or Claim 2 in which the modifying means (30, 62, 159) are such that at least at one position of the input means (14, 51, 115) the trim means (12, 64, 166) produce zero magnification of the output signal.

4. A system as claimed in Claim 1 or Claim 2 or Claim 3 in which the modifying means comprise a cam (30, 62, 77, 159) and cam follower (28, 60, 76, 168).

5. A system as claimed in any one of the preceding claim including an input member and an output member mounted coaxially to turn about a main axis (Y—Y Figures 16—30) and one carrying a sun gear (147) while the other carries a planet carrier (139), a planet gear (154) mounted on the planet carrier to mesh with the sun gear (147) and to turn about a planet axis perpendicular to the main axis (Y—Y) so that movement of the planet gear about its axis will add to or subtract from movement of the sun gear due to that of the input member (115), and cam means (157) serving to effect movement of the planet gear (154) about its axis dependent upon the trim signal.

6. A system as claimed in Claim 5 in which the sun gear and planet gear are meshing bevel gears.

7. A system as claimed in Claim 5 or Claim 6 in which the planet carrier carries a cam follower (168) spaced therefrom and co-operating with a cam (157) generally conforming to the path of the follower and shaped to have a position in which it produces no movement of the follower parallel to the main axis (Y—Y) due to rotation of the cam but adjustable in accordance with the trim signal to produce more or less turning of the follower (139) and planet gear (154) to add to or subtract from the basic movement of the output member.

8. A system as claimed in Claim 4 in which the cam (62) extends generally along and is adjustable about an axis which lies in a plane normal to an axis (Z—Z) about which the input means (51) and output member (72) can turn.

9. A system as claimed in Claim 7 in which the cam (157) has a movable part-circular track (159) having a zero position in which the axis of the part circular track is coaxial with the main axis (Y—Y) and the cam is adjustable about an axis (T—T) perpendicular to the main axis depending on the trim signal.

10. A system as claimed in Claim 7 or Claim 9 in which the cam has a semicircular track (159) adjustable about a diameter perpendicular to the main axis so that when the input signal is such that the follower engages either end of the track, adjustment about the diameter produces no turning of the planet gear (154) whereas when the follower is in an intermediate position it produces a maximum turning movement of the planet gear for a given track displacement.

11. A system as claimed in Claim 10 including a fixed track (158) forming a continuation of the semicircular adjustable track at each end of the latter so that at each end of the range of movement of the input member (115) in which the trim signal contributes a component to the output signal there is a further range in which the trim signal contributes no component to the output signal.

12. A system as claimed in any one of Claims 1—4 including a floating lever (34) having three pivots (32, 48, 38) connected respectively to the input member (14), the output member (44) and a member (42) movable in accordance with the trim signal, at least one of which pivots is adjustable along the lever to and from a position in which the input and output pivots (32, 48) are coxial so that the output movement is independent of the trim signal.

13. A system as claimed in Claim 12 in which the input pivot is carried by an adjustable crank (20) on a slider (24) mounted to slide towards and away from its axis under the control of a stationary cam (30) so that its position depends on the input signal.

## Patentansprüche

1. Mechanisches, variables Autoritäts-Brennstoffsteuersystem für einen Motor mit einer Eingabevorrichtung (14, 51, 115), die auf ein Basissignal aus einem Drosselsteuerbauteil anspricht, das einen gewünschten Grundbrennstoffdurchsatz anfordert, einem Ausgangsbauteil (44, 72, 118), das auf die Eingabevorrichtung anspricht und dessen Bewegung eine Ausgangssignal erzeugt, das eine Zumeßvorrichtung (49) steuert, um den tatsächlichen Brennstoffdurchfluß zu bestimmen, eine Trimmvorrichtung (12, 64, 166), die auf ein Trimmsignal anspricht, das so ausgebildet ist, daß es das Ausgangssignalresultat aus einer bestimmten Position der Eingabevorrichtung variiert, gekennzeichnet durch eine Modifiziervorrichtung (30, 62, 159), die mechanisch von der Position der Eingabevorrichtung abhängt, um die Änderung der Position des Ausgangsbauteiles zu modifizieren, die durch eine gegebene Bewegung der Trimmvorrichtung erzeugt wird.

2. System nach Anspruch 1, dadurch gekennzeichnet, daß das Trimmsignal eine Funktion mindestens eines Motorparameters oder Flugparameters ist.

3. System nach Anspruch 1 oder 2, dadurch gekennzeichnet, daß die Modifiziervorrichtung (30, 62, 159) so ausgelegt ist, daß mindestens bei einer Position der Eingabevorrichtung (14, 51, 115) die Trimmvorrichtung (12, 64, 166) eine Null-Modifikation des Ausgangssignals erzeugt.

4. System nach Anspruch 1, 2 oder 3, dadurch gekennzeichnet, daß die Modifiziervorrichtung einen Nocken (30, 62, 77, 159) und einen Nockenmitnehmer (28, 60, 76, 168) aufweist.

5. System nach einem der vorausgehenden Ansprüche, gekennzeichnet durch ein Eingangsbauteil und ein Ausgangsbauteil, die koaxial so befestigt sind, daß sie um eine Hauptachse (Y—Y, Figuren 16—30) drehen und eines ein Sonnenrad (147) und das andere einen Planetenträger (139) sufnimmt, ein Planetenrad (154), das auf dem Planetenträger befestigt ist und mit dem Sonnenrad (147) kämmt sowie um eine Planetenachse senkrecht zur Hauptachse (Y—Y) dreht, derart, daß die Bewegung des Planetenrades um seine Achse der Bewegung des Sonnenrades aufgrund der des Eingabebauteiles (115) hinzuaddiert oder davon subtrahiert wird, une eine Nockenvorrichtung (157), die dazu dient, die Bewegung des Planetenrades (154) um seine Achse in Abhängigkeit von dem Trimmsignal zu bewirken.

6. System nach Anspruch 5, dadurch gekennzeichnet, daß das Sonnenrad und das Planetenrad miteinander kämmende Kegelräder sind.

7. System nach Anspruch 5 oder 6, dadurch gekennzeichnet, daß der Planetenträger einen Nockenmitnehmer (168) aufnimmt, der von ihm versetzt angeordnet ist und der mit einem Nocken (157) zusammenwirkt, welcher konform mit dem Pfad des Mitnehmers ist und so geformt ist, daß er eine Position einnimmt, in der er keine Bewegung des Mitnehmers parallel zur Hauptachse (Y—Y) aufgrund der Drehung des Nockens erzeugt, sondern in Abhängigkeit von dem Trimmsignal einstellbar ist, um eine mehr oder weniger starke Drehung des Mitnehmers (139) und des Planetenrades (154) zu erzeugen, die der Grundbewegung des Abgabebauteiles hinzuaddiert oder von ihr subtrahiert wird.

8. System nach Anspruch 4, dadurch gekennzeichnet, daß der Nocken (62) sich längs der Achse und einstellbar um die Achse erstreckt, die in einer Ebene senkrecht zu einer Achse (Z—Z) liegt, um die die Eingabevorrichtung (51) und das Abgabebauteil (72) drehen können.

9. System nach Anspruch 7, dadurch gekennzeichnet, daß der Nocken (157) eine bewegliche teilkreisförmige Spur (159) mit einer Nullposition aufweist, in der die Achse der teilkreisförmigen Spur koaxial mit der Hauptachse (Y—Y) verläuft und der Nocken um eine Achse (T—T) senkrecht zur Hauptachse in Abhängigkeit von dem Trimmsignal einstellbar ist.

10. System nach Anspruch 7 oder 9, dadurch gekennzeichnet, daß der Nocken eine halbkreisförmige Spur (159) aufweist, die um einen Durchmesser senkrecht zur Hauptachse so einstellbar ist, daß dann, wenn das Eingangssignal so beschaffen ist, daß der Mitnehmer mit einem Ende der Spur in Eingriff kommt, eine Einstellung um den Druchmesser keine Drehung des Planetenrades (154) erzeugt, während dann, wenn der Mitnehmer eine Zwischenposition einnimmt, eine maximale Drehbewegung des Planetenrades bei einer gegebenen Spurverschiebung erzeugt wird.

11. System nach Anspruch 10, gekennzeichnet durch eine feste Spur (158), die eine Fortsetzung der halbkreisförmigen einstellbaren Spur an jedem Ende dieser Spur bildet, derart, daß an jedem Ende des Bewegungsbereiches des Eingangsbauteiles (115), in welchem das Trimmsignal eine Komponente zum Ausgangssignal beiträgt, ein weiterer Bereich vorhanden ist, in welchem das Trimmsignal keine Komponente zum Ausgangssignal beiträgt.

12. System nach einem der Ansprüche 1—4, gekennzeichnet durch einen Verstellhebel (34) mit drei Schwenkstellen (32, 48, 38), die mit dem Eingangsbauteil (14), dem Ausgangsbauteil (44) und einem Bauteil (42), das in Abhängigkeit von dem Trimmsignal beweglich ist, verbunden sind, wobei mindestens eine der Schwenkstellen längs des Hebels in eine und aus einer Position verstellbar ist, in der die Eingangs- und Ausgangsschwenkstellen (32, 48) koaxial sind, derart, daß die Ausgangsbewegung unabhängig von dem Trimmsignal ist.

13. System nach Anspruch 12, dadurch gekennzeichnet, daß die Eingangsschwenkstelle von einer einstellbaren Kurbel (20) auf einem Schiebar (24) aufgenommen ist, der so befestigt ist, daß er auf die Achse zu und von der Achse weg unter Steuerung eines stationären Nockens (30) gleitet, derart, daß seine Position von dem Eingangssignal abhängt.

**Revendications**

1. Système mécanique, à autonomie de correction variable, pour régler le débit de carburant envoyé à un moteur; comportant un organe d'entrée (14, 51, 115) asservi à un ordre de base provenant d'un organe de commande de puissance pour fixer un débit de base pour le carburant; un organe de sortie (44, 72, 188) asservi à l'organe d'entrée et dont le mouvement constitue un ordre de sortie pour commander un régulateur (49), afin de déterminer la valeur effective du débit de carburant; un organe de correction (12, 64, 166) asservi à un ordre de correction et agencé pour modifier l'ordre de sortie résultant d'une position donnée de l'organe d'entrée; caractérisé en ce qu'il comporte un organe de modification (30, 62, 159), asservi mécaniquement à la position de l'organe d'entrée, pour faire varier la correction de position de l'organe de sortie commandée par un déplacement donne de l'organe de correction.

2. Système selon la revendication 1, caractérisé en ce que l'ordre de correction est fonction d'au moins un paramètre moteur ou paramètre de vol.

3. Système selon l'une des revendications 1 ou 2, caractérisé en ce que l'organe de modification (30, 62, 159) est agencé de telle manière qu'au moins pour une position de l'organe d'entrée (14, 51, 115), l'organe de correction (12, 64, 166) soit inopérant pour rectifier l'ordre de sortie.

4. Système selon l'une des revendications 1 à 3, caractérisé en ce que l'organe de modification comporte une came (30, 62, 77, 159) et un élément d'accompagnement associé à la came (28, 60, 76, 168).

5. Système selon l'une des revendications 1 à 4, caractérisé en ce qu'il comporte un organe d'entrée et un organe de sortie qui sont montés coaxialement de manière à pivoter autour d'un axe principal (Y—Y, Figures 16 à 30), l'un de ces organes portant un pignon solaire (147) et l'autre portant une monture (139), pour un pignon satellite (154) en prise avec le pignon solaire (147) et pouvant tourner autour d'un axe perpendiculaire à l'axe principal (Y—Y); l'agencement étant tel qu'un mouvement du pignon satellite autour de son axe serve à introduire une correction additive ou soustractive dans le mouvement du pignon solaire, résultant du mouvement de l'organe d'entrée (115); et un mécanisme à came (157) étant prévu pour commander le mouvement du pignon satellite autour de son axe, en fonction de l'ordre de correction.

6. Système selon la revendication 5, caractérisé en ce que le pignon solaire et le pignon satellite sont des pignons coniques en prise l'un avec l'autre.

7. Système selon l'une des revendications 5 ou 6, caractérisé en ce que la monture du satellite porte un organe d'accompagnement (168) en saillie et qui coopère avec une came (157) dont le tracé suit sensiblement le trajet de l'organe d'accompagnement, avec un profil tel que dans une certaine position il ne se produise aucun déplacement de l'organe d'accompagnement parallèlement à l'axe principal (Y—Y) sous l'effet de la rotation de la came mais réglable en fonction de l'ordre de correction pour faire tourner plus ou moins l'organe d'accompagnement (138) et le pignon satellite (154) pour introduire une correction additive ou soustractive dans le déplacement de base de l'organe de sortie.

8. Système selon la revendication 4, caractérisé en ce que la came (62) s'étend sensiblement le long d'un axe autour duquel elle est réglable; cet axe étant situé dans un plan normal à un axe (Z—Z) autour duquel peuvent tourner l'organe d'entrée (51) et l'organe de sortie (72).

9. Système selon la revendication 7, caractérisé en ce que la came (157) comporte une partie mobile sur laquelle est ménagée une piste d'appui (159) en arc de cercle; cette partie mobile comportant une position neutre, dans laquelle l'axe de la piste d'appui en arc de cercle est confondu avec l'axe principal (Y—Y); et en ce que la came peut pivoter de manière réglable autour d'un axe (T—T) perpendiculaire à l'axe principal, en fonction de l'ordre de correction.

10. Système selon l'une des revendications 7 ou 9, caractérisé en ce que la came comporte une piste d'appui semi-circulaire (159) adjustable autour d'un diamètre perpendiculaire à l'axe principal pour que lorsque l'ordre d'entrée est tel que l'organe d'accompagnement se trouve en regard de l'une des deux extrémités de la piste, un réglage autour du diamètre ne produise aucune rotation du pignon satellite (154) alors que si l'organe d'accompagnement se trouve dans une position intermédiaire, il produit un mouvement de rotation maximum du pignon satellite pour un déplacement donné de la piste.

11. Système selon la revendication 10, caractérisé en ce qu'il comporte une piste fixe (158) constituant un prolongement de la piste mobile semi-circulaire à chaque extrémité de celle-ci de sorte qu'à chaque extrémité du débattement de l'organe d'entrée (115) où l'ordre de correction fournit une composante de l'ordre de sortie il existe une plage prolongeant l'autre où l'ordre de correction ne fournit aucune composante de l'ordre de sortie.

12. Système selon l'une des revendications 1 à 4, caractérisé en ce qu'il comporte un levier flottant (34) ayant trois pivots (32, 48, 38) respectivement reliés à l'organe d'entrée (14), à l'organe de sortie (44) et à un organe mobile (42) qui se déplace en fonction de l'ordre de correction, au moins l'un de ces pivots étant réglable dans le sens de la longueur du levier pour se rapprocher ou s'écarter d'une position dans laquelle les pivots d'entrée et de sortie (32, 48) sont coaxiaux, le mouvement de sortie étant alors indépendant de l'ordre de correction.

13. Système selon la revendication 12, caractérisé en ce que le pivot d'entrée est porté par une manivelle réglable (20) sur un coulisseau (24) pouvant se déplacer pour se rapprocher et s'écarter de son axe sous l'action d'une came fixe (30) de telle manière que sa position dépende de l'ordre d'entrée.

Fig. 1.

Fig. 2

Fig. 3.

Fig. 4.

Fig. 5.

Fig. 6.

0 047 582

Fig. 7.

Fig. 8.

4

Fig. 9.

Fig. 10.

**0 047 582**

Fig. 11.

Fig. 12.

Fig. 13.

Fig. 14.

Fig. 15.

ENGINE MANAGEMENT SYSTEM

Fig. 16 .

Fig. 17 .

Fig. 27 .

Fig. 18

Fig. 19 .

Fig. 20 .

Fig. 24 .

14

Fig. 21 .

15

Fig. 22

Fig. 23.

Fig. 25 .

Fig.26.

**0 047 582**

Fig. 28 .

Fig. 29 .

Fig. 30 .

20

Fig. 31.